Europäisches Patentamt

European Patent Office

Office européen des brevets

(11) Publication number: **0 325 861 B1**

# EUROPEAN PATENT SPECIFICATION

(45) Date of publication of patent specification: **19.05.93**  (51) Int. Cl.⁵: **C09J 123/28**, C08L 23/28

(21) Application number: **88312305.1**

(22) Date of filing: **23.12.88**

(54) **Aqueous dispersion-type adhesive.**

(30) Priority: **28.12.87 JP 333353/87**

(43) Date of publication of application:
**02.08.89 Bulletin 89/31**

(45) Publication of the grant of the patent:
**19.05.93 Bulletin 93/20**

(84) Designated Contracting States:
**AT BE CH DE ES FR GB GR IT LI LU NL SE**

(56) References cited:
EP-A- 0 208 789
GB-A- 998 868
US-A- 3 395 038
US-A- 3 919 153

(73) Proprietor: **MITSUI PETROCHEMICAL INDUS-TRIES, LTD.**
**2-5, Kasumigaseki 3-chome Chiyoda-ku Tokyo 100(JP)**

(84) Designated Contracting States:
**AT BE CH DE ES FR GB GR IT LI LU NL SE**

(73) Proprietor: **TOYOTA JIDOSHA KABUSHIKI KAISHA**
**1, Toyota-cho Toyota-shi Aichi-ken 471(JP)**

(84) Designated Contracting States:
**BE CH DE ES GR LI LU NL SE AT**

(72) Inventor: **Inagaki,Hajime c/o MITSUI PETRO-CHEMICAL IND. LTD.**
**1-2, Waki 6-chome, Waki-cho Kuga-gun , Yamaguchi(JP)**
Inventor: **Yoshii, Kouji c/o MITSUI PETRO-CHEMICAL IND. LTD.**
**1-2, Waki 6-chome, Waki-cho Kuga-gun, Yamaguchi(JP)**

(74) Representative: **Myerscough, Philip Boyd et al J.A.Kemp & Co. 14, South Square Gray's Inn London, WC1R 5EU (GB)**

**Description**

1. Field of the Invention

The present invention relates to an aqueous dispersion type adhesive. More specifically, it relates to an aqueous dispersion type adhesive having an excellent adhesiveness to a polyolefin resin.

2. Description of the Related Art

The demand for more luxurious interiors of automobiles is increasing yearly, and in line with this demand, linings made from a vinyl chloride resin foam, a cloth comprising a polyester or polyamide resin adhered onto an ABS resin base material, or short fibers comprising a polyester or a polyamide adhered by flocking, are used.

When carrying out the above – mentioned adhesion, the coating and drying of the adhesive are usually conducted in an open place, and therefore, an organic solvent cannot be used, and thus an aqueous dispersion type adhesive is employed. As such an adhesive, a rubber latex or an acrylic acid ester type resin aqueous dispersion has been used (for example, see Japanese Unexamined Patent Publications (Kokai) Nos. 49 – 112990, 55 – 160073, 60 – 199984, 60 – 244534).

Attempts have been made to improve the heat resistance of interior decorative materials of auto – mobiles, but if the ABS resin, which is the base material, is made heat – resistant, the cost is increased and the moldability is lowered. Accordingly, there have been attempts to use a polypropylene resin as the base material, but a polypropylene resin has a poor adhesiveness, and a rubber latex or an acrylic acid ester type resin aqueous dispersion used in the prior art for the ABS resin cannot be used as the adhesive, since a primer treatment of the polypropylene resin is necessary and this increases the cost.

This problem is not limited to the field of interior decorative materials of automobiles, and due to the poor adhesiveness of polyolefin resins in general, a conventional adhesive treatment must be used, and thus there is a need for an aqueous dispersion type adhesive which can be adhered without a primer treatment and without using an organic solvent.

SUMMARY OF THE INVENTION

Accordingly, an object of the present invention is to eliminate the above – mentioned problems and to provide an aqueous dispersion type adhesive having an excellent adhesiveness to a polyolefin resin.

Other objects and advantageous of the present invention will be apparent from the following description.

In accordance with the present invention, there is provided an aqueous dispersion type adhesive comprising, as the effective ingredient, an aqueous dispersion containing 5% to 80% by weight, in terms of the solid concentration, of a chlorinated olefinic polymer which is a chlorinated product of an olefinic polymer having (a) a content of propylene unit of 15 to 90 mol% and (b) a content of an $\alpha$ – olefin unit having 4 to 6 carbon atoms of 10 to 85 mol% (the total content of (a) and (b) is 100 mol%), and having an intrinsic viscosity $[\eta]$, as measured in decalin at 135°C, of from 0.5 to 5.0 dl/g and a chlorine content of from 5% to 40% by weight.

DESCRIPTION OF THE PREFERRED EMBODIMENTS

Olefinic Polymer

Examples of the $\alpha$ – olefinic unit (b) as the constituent unit of the olefinic polymer to be used in the present invention include $\alpha$ – olefins having 4 to 6 carbons such as 1 – butene, 1 – pentene, 4 – methyl – 1 pentene, 3 – methyl – 1 – pentene, and 1 – hexene, and one or two or more kinds thereof may be used as the constituent units of the olefinic polymer. As the constituent unit of the olefinic polymer, within the range which does not interfere with the effect of the present invention, for example, conjugated dienes such as butadiene and isoprene; non – conjugated dienes such as 1,4 – hexadiene, 1,7 – octadiene, dicyclopen – tadiene, 5 – ethylidene – 2 – norbornene, 5 – vinyl – 2 – norbornene, 5 – methylene 2 – norbornene, and 2,5 – norbonadiene; polar vinyl monomers such as (meth)acrylic acid, (meth)acrylic acid salt, (meth)acrylic acid ester, vinyl acetate, vinyl alcohol, 1 – undecylenic acid, 1 – undercenol, and maleic anhydride component units; aromatic vinyl monomers such as styrene, vinyltoluene, $\alpha$ – methylstyrene, and indene also may be contained. Further, as the olefinic polymer, olefinic polymers having a polymerizable unsaturated compound such as acrylic acid, methacrylic acid, and maleic anhydride graft copolymerized thereon also may be

2

used.

When the above conjugated diene or non−conjugated diene is contained as the copolymerizable component of α−olefin, the content thereof is preferably 3 mol% or less, more preferably 0.3 mol% or less. Further, ethylene may be the constituent unit within the range of 30 mol% or less of the whole olefinic polymer.

In the olefinic polymer, the content of the propylene unit (a) is from 15 to 90 mol%, preferably from 20 to 85 mol%, and the content of the α−olefin unit (b) is from 10 to 85 mol%, preferably from 15 to 80 mol%. When the content of the α−olefin unit (b) exceeds 85 mol%, the heat−resistant adhesiveness of the chlorinated product of the olefinic polymer is unsatisfactory, and when the content of the α−olefin polymer is less than 10 mol%, a high chlorine content is required to impart adhesiveness, whereby the heat resistance and adhesiveness to a polyolefin are lowered.

Specific examples of the olefinic polymer include propylene/1−butene copolymer, propylene/4−methyl−1−pentene copolymer, propylene/3−methyl−1−pentene copolymer, propylene/1−butene/ethylene copolymer, propylene/1−butene/1−undecylenic acid copolymer, propylene/4−methyl−1−pentene/1−undecylenic acid copolymer, propylene/1−butene/1−undecenol copolymer, propylene/4−methyl−1−pentene/1−undecenol copolymer, propylene/1−butene/maleic acid (anhydride) copolymer, propylene/1−butene/itaconic acid (anhydride) copolymer, propylene/1−butene/ethylene/maleic acid (anhydride) copolymer, propylene/1−butene/styrene copolymer, propylene/3−methyl−1−butene/styrene copolymer, propylene/3−methyl−1−butene/styrene copolymer, and propylene/4−methyl−1−pentene/styrene copolymer. Particularly preferably, propylene/1−butene copolymer and propylene/1−butene/ethylene copolymer.

As the olefinic polymers, those having an intrinsic viscosity [$\eta$], as measured in decalin at 135˚C, of 0.5 to 5.0 dl/g, preferably 0.8 to 4.0 dl/g are used. The molecular weight distributions ($\overline{M}w/\overline{M}n$, value measured by the GPC method) thereof are preferably from 1 to 20, more preferably from 1 to 15. The olefinic polymer to be used in the present invention is preferably a crystalline polyolefin having a crystallinity of from 10 to 50%, more preferably from 10 to 40%.

In the present invention, if the intrinsic viscosity [$\eta$] is less than 0.5 dl/g, the basic adhesiveness is unsatisfactory due to the low cohesive force of the adhesive, and if higher than 5.0 dl/g, the emulsifiability is undesirably lowered. If the molecular weight distribution ($\overline{M}w/\overline{M}n$) exceeds 20, the adhesive strength will be undesirably lowered due to an increase of the content of low molecular weight polymers. Further, if the crystallinity is less than 10%, the basic adhesiveness is unsatisfactory due to the lowered cohesive force of the adhesive, and if it exceeds 50%, the chlorination degree must be increased to more than 40% by weight, to impart solubility in a solvent, and thus the olefinic polymer will be degraded, and further, the adhesiveness to a polyolefin will be lowered.

These olefinic polymers can be prepared by a copolymerization of the above propylene and α−olefins by methods conventionally used in the prior art, for example, by using a vanadium system catalyst or a titanium system catalyst comprising magnesium, titanium, and halogen components.

Chlorinated Olefinic Polymer

Chlorinated products of the olefinic polymers are used in the present invention. The chlorine content to be introduced into the above olefinic polymer is preferably from 5% to 40% by weight of the chlorinated olefinic polymer, more preferably from 8% to 35% by weight. When the chlorine content is less than 5% by weight, the heat−resistant adhesiveness to a chlorine containing polymer and/or an aromatic polymer under a high temperature atmosphere will be lowered, and if the chlorine content exceeds 40% by weight, both the adhesiveness to polyolefins in general and the heat−resistant adhesiveness of the adhesive are undesirably lowered.

The chlorinated product of the olefinic polymer can be prepared by the following methods. A first method in which the olefinic polymer is pulverized into fine particles, and the fine particles are formed into an aqueous suspension and placed in contact with molecular chlorine at a temperature of about 70 to 90˚C; a second method in which the olefinic polymer is dissolved in a solvent stable to chlorine, such as carbon tetrachloride, tetrachloroethylene, and chlorobenzene, to form a homogeneous solution, which is then placed in contact with molecular chlorine; and a third method in which a chlorine compound such as N−chloroamide, N−chlorosuccinimide, and 1,3−dichloro−5,5−dimethylhydantoin is uniformly kneaded into the olefinic polymer by rolls or a Banbury mixer, etc., and the mixture heated to a temperature at which the chlorine is liberated. Among these methods, the chlorination in an aqueous suspension or solution is particularly preferred. When a halogenation reaction is carried out in a solution, more preferably it is carried out in the presence of a radical initiator or under an irradiation of UV−rays or visible rays, to enable an efficient reaction progress. The extent of the chlorination can be controlled by suitably selecting the amount of molecular chlorine or other chlorination agents employed, the reaction time, and the reaction tempera－ ture.

Preferably, the chlorinated olefinic polymer of the present invention has a crystallinity of 45% or less, more preferably 30 to 10%. The intrinsic viscosity [$\eta$] is preferably within substantially the same range as the starting olefinic polymer, but more preferably is from 0.8 to 4.0 dl/g.

Aqueous Dispersion

The aqueous dispersion type adhesive of the present invention comprises an aqueous dispersion containing, as the solid component, a concentration of 5% to 80% by weight, preferably 15 to 70% by weight, of the above chlorinated olefinic polymer. The particle size of the chlorinated olefinic polymer dispersed in water can be any size by which a stable aqueous dispersion can be formed, but preferably is about 0.01 $\mu$m to 30 mm, more preferably 0.05 $\mu$m to 10 mm.

The aqueous dispersion may be formed by dispersing only the chlorinated olefinic polymer in water, but as long as the adhesiveness is not impaired, the composition also may be formed with an addition of other additives, such as other polymer components, antioxidants, UV－ray absorbers, hydrochloric acid absorbers, antidehydrochlorination agents, pigments, dyes, fillers, nucleation agents, antiblocking agents, slipping agents, antistatic agents, and flame retardants.

Examples of the polymer to be mixed in the chlorinated in the chlorinated olefinic polymer include, in addition to the olefinic polymer before chlorination, rubber components such as ethylene/$\alpha$－olefin copolymer rubber, ethylene/$\alpha$－olefin/diene copolymer rubber, polyisobutylene, butyl rubber, styrene/butadiene copolymer rubber, nitrile rubber, and silicone rubber.

As the antioxidant, 2,6－ditert－butyl－p－cesol, o－tert－butyl－p－cresol, tetrakis－[methylene－3－ (3,5－di－tert－butyl 4－hydroxyphenyl)propionate]methane, $\beta$－naphthylamine, and p－phenylene－diamine can be exemplified.

As the UV－absorber, 2,4－dihydroxybenzophenone, 2－(2'－dihydroxy－3',5' di－tert－butylphenyl)－ 5－chlorobenzotriazole, 2－(2－hydroxy－3－tert－butyl－5－methylphenyl)－5－chlorobenzotriazole, and bis(2.2'6.6')－tetramethyl－4－piperidine)sebacatecan be exemplified.

As the hydrochloric acid absorber and the anti－dehydrochlorination agent, epoxy soybean oil, metals salts of saturated and unsaturated higher fatty acids, stearic acid, dibutyltin maleate, tribromophosphate, tetrasodium pyrophosphate, 4'－tert－butylphenylsalicylate, disodium－o－phosphate, pyrophosphate, o－ phosphate, and phosphite of alkali metal can be exemplified.

For dispersing the above chlorinated olefinic polymer or a composition containing the same in water, an emulsifier is preferably added. Also, a thickener for enhancing the viscosity of the emulsion, or a defoaming agent for suppressing foaming during emulsification may be added.

Surfactants usable as the emulsifier in the present invention include, for example, sulfonic acid type or carboxylic acid type anionic surfactants such as alkylnaphthalenesulfonate, Na salt of naphthalenesulfonic acid－formaldehyde condensate, Na salt of cresol Schaffer's acid－formaldehyde condensate, Na alkyl－ diphenyl ether disulfonate, Ca ligninsulfonate, Na melamine resin sulfonate, special polyacrylic acid salt, gluconic acid salt, olefin－maleic acid salt copolymer, carboxymethyl cellulose Na salt, metal soap (Zn, Al, Na K salt), and stearic acid triethanolamine salt; and nonionic surfactants such as fatty acid monoglyceride, sorbitane fatty acid partial ester, sugar fatty acid partial ester, polyglycerine fatty acid partial ester, polyoxyethylene alkyl ether, polyoxyethylene alkylphenyl ether, polyoxyethylene sorbitane fatty acid partial ester, polyoxyethylene sorbitol fatty acid partial ester, polyoxyethylene glycerine fatty acid partial ester, polyoxyethylene fatty amide, polyoxyethylene (hardened) castor oil, polyethylene glycol fatty acid ester, polyoxyethylene－polyoxypropylene block polymer, hydroxyethyl cellulose, polyvinyl alcohol, polyvinyl pyrrolidone, and methyl cellulose; cationic surfactants such as alkylammonium chloride, trimethylalkylam－ monium bromide, and alkylpyridinium chloride; amphoteric surfactants such as dimethylalkylbetaine and alkylglycine; and the like. The amount of emulsifier added is preferably about 0.1 to 50 parts by weight, more preferably 0.2 to 45 parts by weight, per 100 parts by weight of the resin solids.

Examples of the thickener usable in the present invention are water－soluble polymers such as carboxymethyl cellulose, methyl cellulose, ammonia milk casein, vinyl alcohol/methacrylic acid copolymer, starch, and protein. The amount of thickener added is preferably up to 200 parts by weight at maximum, per 100 parts by weight of the resin solids, more preferably is 100 parts by weight or less.

As the method of dispersing the chlorinated olefinic polymer or a composition containing the same in water, any method may be employed; for example, the method in which the chlorinated olefinic polymer or the composition is dispersed in powdery state directly in water; the method in which the chlorinated olefinic

EP 0 325 861 B1

polymer is melted by increasing the concentration in water and dispersed by a rapid stirring; and the method in which the olefinic polymer is chlorinated as an aqueous suspension to form an aqueous dispersion as such. The preferable dispersing method is that in which 10 to 50% by weight of the chlorinated olefinic polymer or the composition is dissolved in an organic solvent such as benzene or toluene, the solution is stirred by a homomixer while adding water and a hydrophilic solvent such as methyl alcohol, ethyl alcohol, or isopropyl alcohol, and an emulsifier, and the organic solvent and the hydrochloric solvent are removed by an evaporator. The organic solvent can remain in these aqueous dispersions, to an extent which is not dangerous.

Aqueous Dispersion of Acrylic Acid Ester Polymer

The aqueous dispersion of the above chlorinated olefinic polymer can be used, per se, as the adhesive, but the adhesion effect can be enhanced when it is used as a mixture with an acrylic acid ester polymer aqueous dispersion used in the prior art as the adhesive.

As such an acrylic acid ester polymer aqueous dispersion, an aqueous dispersion containing a polymer having acrylic acid ester units may be employed, including, for example, acrylic acid ester polymer emulsions obtained by polymerizing 50 to 98.5 parts by weight of an acrylic acid ester and/or a methacrylic acid ester, 0.5 to 5 parts by weight of an ethylenically unsaturated acid, 1 to 10 parts by weight of N−methylolacrylamide and/or an alkoxylated derivative thereof, and 0 to 50 parts by weight of other vinyl monomers polymerizable therewith (see Japanese Unexamined Patent Publication (Kokai) No. 55−160073), resin emulsions prepared by an emulsion copolymerization of 30 to 70 parts by weight of a vinyl chloride monomer, 10 to 55 parts by weight of an acrylic acid alkyl ester of an alcohol having 1 to 3 carbon atoms, 0.5 to 10 parts by weight of a carboxyl containing vinyl monomer, and 0 to 5 parts by weight of a vinyl monomer having a crosslinkable functional group such as an epoxy group, hydroxyl group, N−methylamide group or N−alkoxymethylamide, (see Japanese Unexamined Patent Publication (Kokai) No. 49−112990).

Dispersions commercially available as an acrylic acid ester type resin emulsion can be used as the acrylic acid ester polymer aqueous dispersion; for example, an aqueous dispersion of styrene/acrylonitrile/ethylhexyl acrylate/ethyl acrylate/n−butyl acrylate copolymer (molar ratio: 35/35/13/15/7) (trade name: Iodosol, produced by Kanebo NFC K.K.) is a preferable commercially available product.

When these acrylic acid ester type polymer aqueous dispersions are used, the proportions formulated of the above chlorinated olefinic polymer aqueous dispersion (A) and the acrylic acid ester type polymer dispersion (B) are preferably 10 to 100% by weight, more preferably 20 to 100% by weight, for (A), and 0 to 90% by weight, preferably 0 to 80% by weight, for (B).

Method of Using the Adhesive

The aqueous dispersion type adhesive of the present invention is coated on the surface to be coated in the same manner as the aqueous dispersion type adhesive of the prior art, and if necessary, dried by heating to effect adhesion.

The aqueous dispersion type adhesive of the present invention is suitable for the adhesion of a polyolefin resin such as polypropylene resin, and is also effective for a mutual adhesion between polyolefin resins or an adhesion of a polyolefin and another material. As the other materials, there may be included cloth, fiber, plastic, paper, and metal.

The cloth and fiber may include natural fibers such as cotton and hemp; inorganic fibers such as carbon fibers, asbestos fibers, and metal fibers; regenerated celluloses such as viscose rayon and cupra; semi−synthetic fibers such as di− and tri−acetate fibers; cloths, short filaments, long filaments of synthetic fibers such as nylon 6, nylon 66, polyester (polyethyleneterephthalate, etc.) fibers, aromatic polyamide fibers, acrylic fibers, polyvinyl chloride fibers, and polyolefin fibers, as well as polyvinyl alcohol fibers which have been made insoluble or substantially insoluble. Short filaments are adhered by flocking.

Examples of the plastic may include, other than polyolefin resins, any of polyvinyl chloride resins, ABS resins, polyester resins, polyamide resins, polycarbonate resins, epoxy resins, etc. and may be in the form of sheets, films or other molded products for adhesion.

The adhesive of the present invention is suitable for the adhesion of polyolefin resins, but also can be used for the adhesion of other materials.

According to the present invention, since an aqueous dispersion of a chlorinated olefinic polymer is used, an aqueous dispersion type adhesive having a safe and strong adhesive force with a good

5

adhesiveness to polyolefin resins, and without the need for a primer treatment or the use of an organic solvent, can be obtained.

EXAMPLES

The present invention will now be explained in detail by referring to Examples, but these Examples do not in any way limit the present invention.

Example 1

Propylene/1−butene copolymer (70/30 mol%) having an intrinsic viscosity $[\eta]$ of 2.0 dl/g was chlorinated in a conventional manner, and as a result of an analysis by the oxygen combustion method, the chlorine content was found to be 21% by weight. Then, 400 g of a 20% by weight solution of the chlorinated product in toluene, 300 g of deionized water, 180 g of isopropyl alcohol, 2.2 g of oleic acid, and 0.5 g of potassium hydroxide were charged into a 1.5 liter reactor, and the mixture was stirred by a homomixer to obtain an emulsion. The isopropyl alcohol and toluene were evaporated by heating under a reduced pressure in an evaporator, to obtain an aqueous dispersion containing 21% by weight of solids.

An injection molded square plate of a polypropylene produced by Mitsui Petrochemical Industry Ltd. (trade name, J−640) was spray coated with the aqueous dispersion at 200/m², and after pressing lightly by hand on a cloth placed thereon, dried in an air oven at 100˚C for 30 minutes.

A 180˚C peel off test was conducted one hour after drying, by a tensile tester at a tensile speed of 50 mm/min., and a peel−off strength of 2.9 kg/25 mm was exhibited.

Also, 100 checkers were cut at 2 mm intervals, and were peeled off by attaching a cellophane tape thereto, in accordance with the checker peel−off test of JISK−SUOO. The result was passable as 100/100.

Example 2

To the aqueous dispersion of the chlorinated olefinic polymer prepared in Example 1, an aqueous dispersion of a styrene/acrylonitrile/ethylhexyl acrylate/ethyl acrylate/n−butyl acrylate copolymer (molar ratio: 35/35/13/15/7) (trade name; Iodosol, produced by Kanebo NFC K.K.) was added at a ratio of the respective solid components of 70/30 (weight ratio), and the peel−off test was conducted in the same manner as in Example 1. As a result, the peel−off strength was found to be 3.4 kg/25 mm and the checker peel−off test was 100/100.

Comparative Example 1 and Examples 3 − 6

In Comparative Example 1, test strips were prepared in the same manner except for using the adhesives and the base materials shown in Table 1, and the checker peel−off test was conducted. The results are shown in Table 1.

Example 7

A sample was prepared in the same manner as in Example 1 by coating the aqueous dispersion type adhesive onto the injection molded square plate of the polypropylene, then short filaments made of nylon 6 1.0 mm in length and 3 denier were filled by a filling instrument produced by ERNST ROEDERSTEIN GM BH Co., followed by drying in an air oven at 80˚C for 30 minutes. The result of the checker peel−off of this test strip was 100/100.

The checker peel−off test after this strip was maintained in a thermostatic humidifying tank at 50˚C and a relative humidity of 95% for 72 hours was 100/100. Also, all of the test strips maintained in a fadometer at a black panel temperature of 83˚C for 400 hours, and in an air oven at 80˚C for 200 hours, gave the 100/100 results in the checker peel−off test, and no abnormalities were observed.

## Table 1

| | Ex. 1 | Ex. 2 | Com. Ex. 1 | Ex. 3 | Ex. 4 | Ex. 5 | Ex. 6 |
|---|---|---|---|---|---|---|---|
| **Chlorinated olefinic polymer** | | | | | | | |
| Propylene content of starting polymer (mol%) | 70 | 70 | | 70 | 25 | 25 | 70 |
| Kind of $\alpha$-olefin of starting polymer | 1-Butene | 1-Butene | | 1-Butene | 1-Butene | 1-Butene | 1-Butene |
| Content of $\alpha$-olefin of starting polymer (mol%) | 30 | 30 | | 30 | 75 | 75 | 30 |
| [$\eta$] of starting polymr (dl/g) | 2.0 | 2.0 | | 2.0 | 2.2 | 2.2 | 2.0 |
| Chlorine content (wt%) | 21 | 21 | | 21 | 17 | 17 | 21 |
| **Aqueous dispersion type adhesive** | | | | | | | |
| Resin solid (wt%) | 21 | 30 | 40 | 21 | 30 | 25 | 39 |
| Chlorinated olefinic polymer content (wt%) | 21 | 21 | 0 | 21 | 20 | 25 | 11 |
| Kind of acrylic acid ester polymer | None | Iodosol | Iodosol | None | Iodosol | None | Iodosol |
| Content of acrylic acid ester polymer (wt%) | 0 | 9 | 40 | 0 | 0 | 0 | 29 |

EP 0 325 861 B1

Table 1 (Continued)

| | Ex. 1 | Ex. 2 | Com. Ex. 1 | Ex. 3 | Ex. 4 | Ex. 5 | Ex. 6 |
|---|---|---|---|---|---|---|---|
| **Base material** | | | | | | | |
| Trade name | Polypropylene J-640 | | ABS stylac J-640 *1 | | Polypropylene J-640 | | |
| Molding method | Injection molding | Same as on left | Same as on left | Injection molding | Injection molding | Same as on left | Same as on left |
| Defatting method | None | | None | | Wiped with water gasoline | | |
| **Physical properties** | | | | | | | |
| Peel-off test (kg/25 mm) | 2.9 | 3.4 | 0.1 or less | 1.8 | 2.3 | 2.1 | 1.9 |
| Checker peel-off test | 100/100 | 100/100 | 0/100 | 100/100 | 100/100 | 100/100 | 100/100 |

*1: Produced by Asahi Kasei Kogyo K.K.

## Claims

1. An aqueous dispersion type adhesive comprising, as the effective ingredient, an aqueous dispersion containing 5% to 80% by weight, in terms of the solid concentration, of a chlorinated olefinic polymer which is a chlorinated product of an olefinic polymer having (a) a content of propylene units of 15 to 90 mol% and (b) a content of $\alpha$ − olefin units having 4 to 6 carbon atoms of 10 to 85 mol% (the total content of (a) and (b) being 100 mol%), and having an intrinsic viscosity [$\eta$], as measured in decalin at 135 ˚ C, of from 0.5 to 5.0 dl/g, and a chlorine content of from 5% to 40% by weight.

2. An aqueous dispersion type adhesive as claimed in claim 1, wherein said $\alpha$ − olefin is at least one component selected from the group consisting of 1 − butene, 1 − pentene, 4 − methyl − 1 − pentene, 3 − methyl − 1 − pentene, and 1 − hexene.

3. An aqueous dispersion type adhesive as claimed in claim 1, wherein the olefinic polymer further comprises 3 mol% or less of a conjugated or non − conjugated diene.

4. An aqueous dispersion type adhesive as claimed in claim 1, wherein the molecular weight distribution $\overline{M}w/\overline{M}n$, as measured by a GPC method, is from 1 to 20.

5. An aqueous dispersion type adhesive as claimed in claim 1, wherein the intrinsic viscosity [$\eta$] of the chlorinated olefinic polymer, as measured in decalin at 135 ˚ C, is 0.5 to 5.0 dl/g.

6. An aqueous dispersion type adhesive as claimed in claim 1, wherein the particle size of the dispersed chlorinated olefinic polymer is 0.01 $\mu$m to 30 mm.

**Patentansprüche**

1. Ein wäßriger Dispersionsklebstoff, der als wirksamen Bestandteil eine wäßrige Dispersion aus 5 bis 80 Gew. − %, ausgedrückt als Feststoff − Konzentration, eines chlorierten Olefinpolymers enthält, das ein chloriertes Olefinprodukt eines Olefinpolymers mit (a) einem Gehalt an Propylen − Einheiten von 15 bis 90 mol% und (b) einem Gehalt an $\alpha$ − Olefinen mit 4 bis 6 Kohlenstoffatomen von 10 bis 85 mol% (wobei der Gesamtgehalt an (a) und (b) 100 mol% beträgt), eine Intrinsic − Viskosität [$\eta$], wie in Decalin bei 135 ˚ C gemessen, von 0.5 bis 5.0 dl/g und einen Chlorgehalt von 5 bis 40 Gew. − % aufweist.

2. Ein wäßriger Dispersionsklebstoff gemäß des Anspruchs 1, wobei das besagte $\alpha$ − Olefin wenigstens eine Komponente aus der Gruppe 1 − Buten, 1 − Penten, 4 − Methyl − 1 − Penten, 3 − Methyl − 1 − Penten und 1 − Hexen ist.

3. Ein wäßriger Dispersionsklebstoff gemäß des Anspruchs 1, wobei das Olefinpolymer ferner 3 mol% oder weniger eines konjugierten oder nicht konjugierten Diens enthält.

4. Ein wäßriger Dispersionsklebstoff gemäß des Anspruchs 1, wobei die Molekulargewichtsverteilung $\overline{M}w/\overline{M}n$, wie durch eine GPC − Methode gemessen, 1 bis 20 beträgt.

5. Ein wäßriger Dispersionsklebstoff gemäß des Anspruchs 1, wobei die Intrinsic − Viskosität [$\eta$] des chlorierten Olefinpolymers, wie in Decalin bei 135 ˚ C gemessen, 0.5 bis 5.0 dl/g beträgt.

6. Ein wäßriger Dispersionsklebstoff gemäß des Anspruchs 1, wobei die Partikelgröße des dispergierten chlorierten Olefinpolymers 0.01 $\mu$m bis 30 mm beträgt.

**Revendications**

1. Un adhésif du type à dispersion aqueuse comprenant, comme ingrédient efficace, une dispersion aqueuse contenant de 5% à 80% en poids, en termes de concentration de solides, d'un polymère oléfinique chloré qui est un produit chloré d'un polymère oléfinique ayant (a) une teneur en unités propylène de 15 à 90% mol. et (b) une teneur en unités $\alpha$ − oléfine ayant de 4 à 6 atomes de carbone de 10 à 86% mol. (la teneur totale en (a) et (b) est de 100% mol.), et ayant une viscosité intrinsèque [$\eta$], mesurée dans du Decalin (décahydronaphtalène) à 135 ˚ C, de 0,5 à 5,0 dl/g et une teneur en chlore de 5% à 40% en poids.

2. Un adhésif du type à dispersion aqueuse suivant la revendication 1, dans lequel ladite $\alpha$ − oléfine est au moins un composant choisi parmi le groupe composé de 1 − butène, 1 − pentène, 4 − méthyl − 1 −

pentène, 3 − méthyl − 1 − pentène et 1 − hexène.

3. Un adhésif du type à dispersion aqueuse suivant la revendication 1, dans lequel le polymère oléfinique comprend, en outre, 3% mol. ou moins d'un diène conjugué ou non − conjugué.

4. Un adhésif du type à dispersion aqueuse suivant la revendication 1, dans lequel la répartition des poids moléculaires $\overline{M}w/\overline{M}n$, mesurée par une méthode GPC, est de 1 à 20.

5. Un adhésif du type à dispersion aqueuse suivant la revendication 1, dans lequel la viscosité intrinsèque $[\eta]$ du polymère oléfinique chloré, mesurée dans du Decalin (décahydronaphtalène) à 135°C, est de 0,5 à 5,0 dl/g.

6. Un adhésif du type à dispersion aqueuse suivant la revendication 1, dans lequel la grosseur de particules du polymère oléfinique chloré dispersé est de 0.01 $\mu$m à 30 mm.